# EUROPEAN PATENT SPECIFICATION

(11) **EP 0 681 884 B1**
(45) Date of publication and mention of the grant of the patent: **28.01.1998**
(21) Application number: 95302998.0
(22) Date of filing: 02.05.1995
(51) Int. Cl.: B23H 7/02

(54) **Submerged type wire cutting electrical discharge machining equipment**
Unterwasserdrahtschneidefunkenerosionsmaschine
Equipement d'électroérosion par fil du type immergé

(30) Priority: 11.05.1994 JP 97659/94
(43) Date of publication of application: 15.11.1995
(73) Proprietor: FANUC LTD., Minamitsuru-gun, Yamanashi 401-05 (JP)
(72) Inventor: Ishihara, Mitsuyoshi, Fanuc. No. 3 Villa Karamatsu, Minamitsuru-gun, Yamanashi 401-05 (JP)
(74) Representative: Jackson, Peter Arthur

(56) References cited:
- FR-A- 2 606 692

## Description

This invention relates to an improvement applicable to submerged type wire cutting electrical discharge machining equipment. More specifically, this invention relates to an improvement developed for preventing machining chips produced during electrical discharge machining from sticking to the movable members of the equipment which are immersed in a machining liquid and for making the maintenance of the equipment easy.

Wire cutting electrical discharge machining equipment is defined as equipment employable for machining a metal work by electrical discharge which takes place between the metal work and a wire electrode which extends between upper and lower wire guides. During a period in which electrical discharge machining is conducted, a machining liquid is sprayed to a machining region or an electrical discharge gap which is a gap between the work and the wire electrode remained for allowing electric discharge to occur therein, from the upper and lower wire guides.

The wire cutting electrical discharge machining equipment is classified into two, a non-submerged type and a submerged type. In the case of a non-submerged type wire cutting electrical discharge machining equipment, the machining region is not immersed in the machining liquid but is arranged in a machining vessel to prevent the machining liquid from splashing around the equipment. In the case of a submerged type wire cutting electrical discharge machining equipment, the machining region is immersed in the machining liquid which is filled in a machining vessel.

Since the wire electrode is a fine metal wire having an approximate diameter of 0.3 mm, and since the machining chip produced during electrical discharge machining is fine metal powder having an approximate diameter of several 10 micrometers, the machining chips of nonsubmerged type wire cutting electrical discharge machining readily flow away from the machining region with the machining liquid and there is little possibility for the machining chips to stick to the members located in the neighbourhood of the machining region.

In the case of submerged type wire cutting electrical discharge machining, however, the machining chips are inclined to stick to the inner surface of the machining vessel, the movable members of the equipment located in the neighbourhood of the machining region, etc., including a sliding surface of the lower wire guide supporting arm which penetrates the machining vessel and the door of the machining vessel. Therefore, the submerged type wire cutting electrical discharge machining equipment available in the prior art is involved with a drawback in which the machining chips stuck onto the movable members thereof prevent the movable members of the equipment from smoothly operating.

The object of this invention is to provide submerged type wire cutting electrical discharge machining equipment which is free from a drawback in which the machining chips stick to the movable members of the equipment such as slidable parts of the lower wire guide supporting arm, resulting in advantages that the movable members of the equipment are allowed to smoothly operate and that the maintenance of the submerged type wire cutting electrical discharge machining equipment is easy.

To achieve the foregoing object, submerged type wire cutting electrical discharge machining equipment provides a machining vessel consisting of a lower vessel and an upper vessel separated from each other by a membrane which is penetrated by a lower wire guide, which allows a limited quantity of liquid to flow therepast from the lower vessel to the upper vessel and which is slidable along the lower surface of a work supporting bed, the machining vessel being further provided with a liquid pressure control means for maintaining the liquid pressure in the lower vessel higher than the liquid pressure in the upper vessel.

This invention, together with its various features and advantages, can be readily understood from the following more detailed description presented in conjunction with the following drawings, in which :
Fig. 1 is a schematic drawing of submerged type wire cutting electrical discharge machining equipment ln accordance with an embodiment of this inventlon,
Fig. 2 is a schematic drawing of one example of the arrangement of a membrane and a liquid pressure control means employable for submerged type wire cutting electrical discharge machining equipment in accordance with this invention, and
Fig. 3 is a schematic drawing of another example of the arrangement of a membrane employable for submerged type wire cutting electrical discharge machining equipment in accordance with this invention.

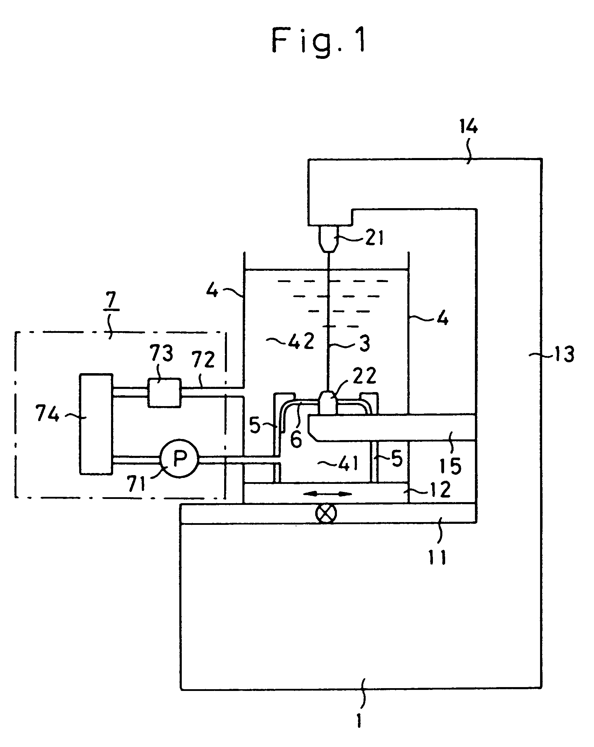

Referring to Fig. 1, base 1 supports an X-table 11 and a Y-table 12 which are movable thereon in the directions respectively of the X direction and of the Y direction. An upper wire guide supporting arm 14 horizontally extending from a column 13 vertically extending from the bed 1, supports an upper wire guide 21. A wire electrode 3 is extended with tension between the upper wire guide 21 and a lower wire guide 22 supported by a lower wire guide supporting arm 15 which horizontally extends from the column 13. A machining vessel 4 penetrated by the lower wire guide supporting arm 15 is arranged on the X-table 11 and the Y table 12 which are movable respectively in the X direction and the Y direction.

A work supporting bed 5 is placed in the machining vessel 4 to hold a work (not shown) thereon. A membrane 6 which is penetrated by the lower wire guide 22 but allows a marginal quantity of the machining liquid to flow through clearances between the membrane and the work supporting bed 5, is arranged to be allowed to slide against the lower surface of the work supporting bed 5 upon movement of the bed with the tables 11, 12. In this manner, the machining vessel 4 is divided into a lower vessel 41 and an upper vessel 42 by the membrane 6.

A liquid pressure control means 7 consisting of a pump 71, a machining liquid drain tube, a strainer 73 and a machining liquid tank 74, functions to maintain the liquid pressure of the lower vessel 41 higher than the liquid pressure of the upper vessel 42 and to drain the liquid from the upper vessel 42. This is because the membrane 6 is urged toward the lower surface of the work supporting bed 5 whilst allowing the machining liquid to flow to a limited extent past the membrane 6, into the upper vessel 42 from the lower vessel 41. When the machining liquid is drained from the upper vessel 42, the machining chips flow away from the upper vessel 42.

In the case where the machining liquid is water, a non-circulation system can be employed, and the strainer 73 and the machining liquid tank 74 can be eliminated. As a result, there remains little possibility for the machining chips to stick to the movable members of the submerged type wire cutting electrical discharge machining equipment, such as the lower wire guide supporting arm 15 which penetrates the machining vessel 4 into the lower vessel 41 and much possibility for the movable members to smoothly operate.

Some variety is allowed for the structure of the membrane employable for the submerged type wire cutting electrical discharge machining equipment in accordance with this invention.

Referring to drawings, two exemplary models will be described below.

### EXAMPLE 1

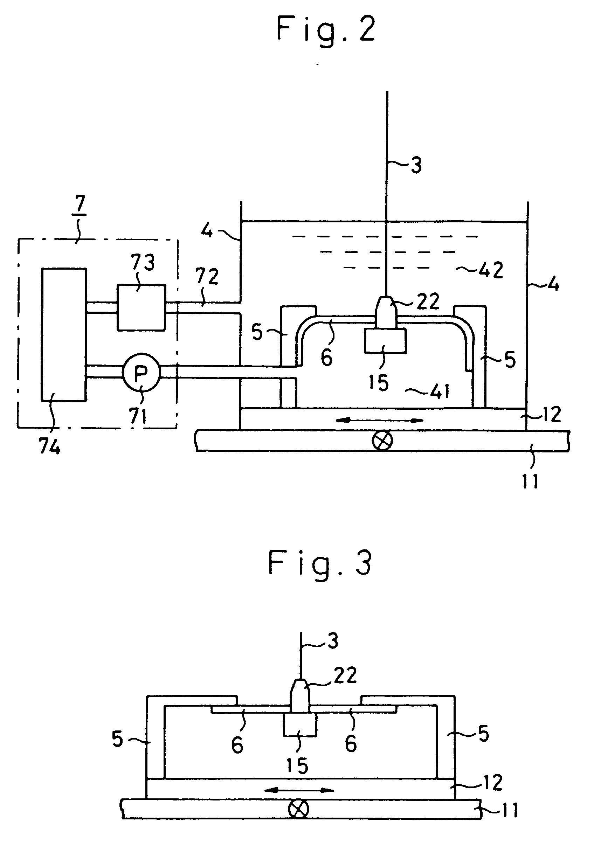

Referring to Fig. 2, a machining vessel 4 is arranged on an X-table 11 and a Y-table 12. A lower wire guide supporting arm 15 which is supported by a column (not shown) and which supports a lower guide 22 which guides a wire electrode 3, extends in the direction perpendicular to the page. A work supporting bed 5 is placed in the machining vessel 4 to support a work (not shown). A membrane 6 of a soft film e.g. a rubber film is arranged to be urged against and to be slidable along the lower and inner side surfaces of the work supporting bed 5, thus separating the machining vessel 4 into a lower vessel 41 and an upper vessel 42, when the membrane 6 is urged toward the lower surface of the work supporting bed 5 by the liquid pressure in the lower vessel 41. A liquid pressure control means 7 consisting of a pump 71, a liquid drain tube 72, a strainer 73 and a machining liquid tank 74, supplies a machining liquid into the lower vessel 41 and draws the machining liquid from the upper vessel 42 in which machining is conducted.

### EXAMPLE 2

Referring to Fig. 3, a membrane consisting of a hard plate e.g. a metal plate and which is supported by a lower wire guide supporting arm 15, is arranged to be slidable against the lower surface of the work supporting bed 5.

The foregoing description has clarified that submerged type wire cutting electrical discharge machining equipment which is free from a drawback wherein the machining chips stick to the movable members of the equipment such as the slidable surface of the lower wire guide supporting arm and which has advantages that the movable members of the equipment are allowed to smoothly operate and that the maintenance of the equipment is easy, was successfully provided by this invention.

## Claims

1. Submerged type wire cutting electrical discharge machining equipment comprising a machining vessel (4) consisting of a lower vessel (41) and an upper vessel (42) separated from each other by a membrane (6) which is penetrated by a lower wire guide (22), which allows a limited quantity of liquid to flow therepast from the lower vessel to the upper vessel and which slides along the lower surface of a work supporting bed (5), the machining vessel being further provided with a liquid pressure control means (7) for maintaining the liquid pressure in the lower vessel higher than the liquid pressure in the upper vessel.

## Patentansprüche

1. Drahtschneidefunkenerosionsmaschine des untergetauchten Typs mit einem Formgebungsbehälter (4), der aus einem unteren Behälter (41) und einem oberen Behälter (42) besteht, die voneinander durch eine Membran (6) getrennt sind, die von einer unteren Drahtführung (22) durchdrungen wird, die es gestattet, daß eine begrenzte Menge der Flüssigkeit hinter diese vom unteren Behälter zum oberen Behälter fließt, und die sich entlang der unteren Oberfläche eines Werkstückstützbettes (5) verschiebt, wobei der Formgebungsbehälter weiter mit einer Flüssigkeitsdrucksteuervorrichtung (7) für das Aufrechthalten eines Flüssigkeitsdruckes im unteren Behälter, der höher ist als der Flüssigkeitsdruck im oberen Behälter, versehen ist.

## Revendications

1. Appareil d'usinage par électroérosion, à fil de coupe, du type immergé, comportant une cuve d'usinage (4) constituée d'une cuve inférieure (41) et d'une cuve supérieure (42) séparées l'une de l'autre par une membrane (6) qui est traversée par un guide inférieur de fil (22), qui permet à une quantité limitée de liquide de passer de la cuve inférieure à la cuve supérieure, et qui coulisse le long de la surface inférieure d'un lit (5) de support d'une pièce, la cuve d'usinage étant en outre dotée d'un moyen (7) de commande de la pression du liquide, pour maintenir dans la cuve inférieure une pression de liquide supérieure à la pression de liquide dans la cuve supérieure.
